# FASCICULE DE BREVET EUROPEEN

(11) **EP 0 672 856 B1**
(45) Date de publication et mention de la délivrance du brevet: **28.01.1998**
(21) Numéro de dépôt: 95400332.3
(22) Date de dépôt: 16.02.1995
(51) Int. Cl.: F16L 1/24

(54) **Joug préfabriqué pour stabiliser une conduite, procédé de stabilisation et application**
Vorgefertigtes Joch zum Stabilisieren einer Rohrleitung, Verfahren zur Stabilisierung und ihre Anwendung
Prefabricated yoke for stabilizing a pipeline, method for stabilization and its application

(30) Priorité: 17.02.1994 FR 9401823
(43) Date de publication de la demande: 20.09.1995
(73) Titulaire: BOUYGUES OFFSHORE, F-78180 Montigny-le-Bretonneux (FR)
(72) Inventeur: Roger, Pierre, F-92240 Bois Colombes (FR)
(74) Mandataire: Schrimpf, Robert

(56) Documents cités:
- FR-A- 2 458 733
- GB-A- 2 242 251

## Description

L'invention concerne la stabilisation d'une conduite posée sur le fond de la mer et elle s'applique notamment à la stabilisation des conduites situées dans des sites très exposés, sous faible profondeur d'eau, susceptibles d'être soumises à des houles déferlantes et à des courants forts.

L'invention s'applique notamment aux conduites ayant un diamètre extérieur compris dans la gamme environ 0,5 m - environ 3,5m.

Un but de l'invention est de fournir une technique permettant de stabiliser une conduite sans préparation particulière du fond de la mer, cette technique convenant donc particulièrement bien pour les sols rocheux où les seules alternatives sont l'ensouillage après déroctage ou la mise en place d'ancrages forés.

On connait un dispositif de stabilisation de conduite constitué d'un joug qui comporte deux blocs de lestage rigides montés en opposition aux extrémités opposées d'une traverse apte à prendre une configuration cintrée et dont la longueur est choisie pour que la traverse à cheval sur la conduite soit tendue par les blocs et maintienne la conduite en position de service lorsque les blocs sont au contact du sol (GB-A-2 242 251).

Selon cette publication, la traverse est constituée d'une part par une base flexible inférieure ayant la même largeur que les blocs et fixée à ses extrémités sous les bases des blocs et qui s'interpose entre les blocs et la conduite et, d'autre part par une bande supérieure fixée à ses extrémités sur les dessus des blocs et qui passe sur la conduite au dessus de la base flexible.

La bande supérieure a une longueur calculée pour empêcher les blocs de pendre à la verticale lorsque le dispositif est mis à cheval sur la conduite avant la pose, et elle peut être supprimée lorsque la conduite est arrivée dans sa position de service, les blocs reposant sur le fond de la mer. Cette bande n'a donc pas une fonction de stabilisation mais elle est nécessaire pour la pose.

La présente invention vise à fournir un dispositif plus simple et également plus efficace, notamment pour la pose sur un fond marin totalement irrégulier.

On y parvient selon l'invention par le fait que la traverse est fixée à ses extrémités aux faces frontales des blocs destinées au contact avec la conduite, en sorte que ces blocs soient maintenus appliqués contre la conduite et puissent pivoter non seulement vers le bas et vers le haut, mais aussi latéralement en tournant sur eux-même, les attitudes des deux pouvant varier indépendamment.

Un joug, conforme à l'invention, peut encore présenter une ou plusieurs des caractéristiques suivantes :
- la longueur de la traverse entre les fixations de la traverse aux blocs est comprise entre environ 0,50 fois et environ 0,75 fois le périmètre extérieur de la conduite ;
- la traverse est fixée aux blocs par des articulations présentant au moins deux degrés de liberté ;
- les blocs présentent des ancrages situés en partie basse desdites faces frontales pour la fixation de la traverse ;
- lesdites faces frontales présentent des saignées dans lesquelles sont situées lesdits ancrages ;
- la face frontale présente plusieurs ancrages répartis en hauteur ;
- lesdites faces frontales sont plates ou sensiblement planes ;
- le bloc est tel que son centre de gravité est plus près de la face frontale du bloc que de l'extrémité opposée du bloc ;
- les blocs présentent une face de base plane ou sensiblement plane,
- les faces de bases sont évidées de façon à constituer une gorge centrale entre deux jambages dirigés vers la face frontale du bloc,
- la face de base et la face frontale font entre elles un angle compris dans la gamme 95 - 125° ;
- les blocs présentent une face de dessus inclinée montante en direction de la face frontale ;
- les blocs ont en section droite par un plan vertical une forme générale sensiblement triangulaire ;
- les blocs présentent des ouvertures traversantes ;
- les blocs comportent un prolongement situé à l'opposé de la face frontale ;
- les blocs comportent des ancrages pour leur suspension à une élingue de pose, ces ancrages étant situés en sorte que la traverse soit sensiblement horizontale pendant la dépose du joug sur la conduite;
- la traverse est constituée par une chaîne, câble, sangle ou similaire ;
- la traverse est constituée par une tôle ou un fer plat cintré ;
- les blocs sont en béton ;
- les fixations de la traverse aux blocs sont démontables ;
- la masse du bloc est comprise dans la gamme 2-50 T ;
- on pose la conduite sur des berceaux pour assurer un bon appui dans les sols irréguliers.

On décrira, ci-après, un exemple de mise en oeuvre de l'invention, en référence aux figures du dessin joint sur lequel :
- la fig. 1 est une vue en perspective d'un bloc de lestage conforme à l'invention ;
- les figs. 2 à 4 montrent le bloc, respectivement en vue de côté, en vue de l'avant et en vue de dessus ;
- la fig. 5 est une vue du détail en coupe verticale montrant les moyens de fixation de la traverse ;
- la fig. 6 est une coupe horizontale partielle montrant l'ancrage de la traverse ;
- la fig. 7 est une vue latérale du bloc dans la position où il se trouve pendant la descente du joug vers la conduite ;
- la fig 8 est une coupe verticale transversale montrant les moyens d'ancrage du bloc à des élingues ;
- la fig. 9 est un schéma, dans un plan vertical, perpendiculaire à l'axe de la canalisation, montrant un joug conforme à l'invention, en cours de pose, dans une zone accidentée ;
- la fig. 10 est un schéma analogue à celui de la fig. 9, montrant le déplacement du point de contact d'un bloc avec la conduite, pendant la pose ;
- la fig. 11 est une vue longitudinale d'une section de conduite montrant différents jougs de stabilisation conformes à l'invention ;
- la fig. 12 est un schéma des forces hydrodynamiques en jeu ;
- et les figs. 13 à 23 sont des schémas montrant différentes réalisations de blocs de lestage conformes à l'invention.

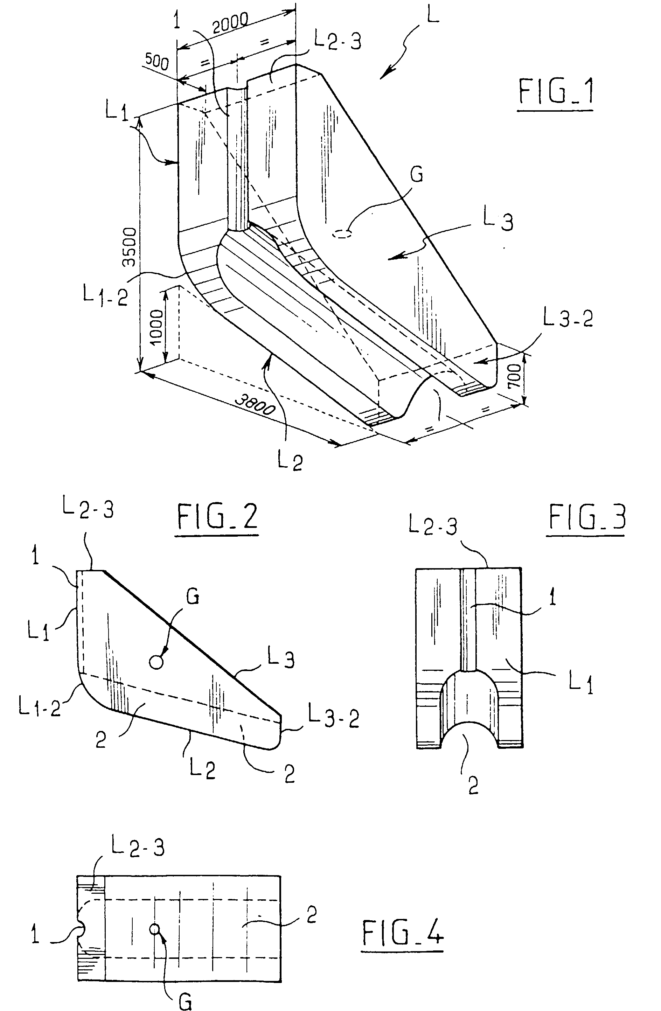

Les figs. 1 - 4 représentent un bloc de lestage (L) dont la section droite dans un plan vertical perpendiculaire à l'axe de la conduite est de forme générale triangulaire.

Ce bloc présente une face plane frontale (L₁) destinée au contact avec la conduite, une face plane de base (L₂) destinée au contact avec le sol marin et une face de dessus (L₃) en pente montante vers la face de contact (L₁). Ces faces sont raccordées de proche en proche par une petite face courbe (L₁₋₂), une petite face supérieure horizontale (L₂₋₃) et une petite face arrière verticale (L₃₋₂).

Les faces frontales et de base forment un dièdre d'angle supérieur à 90° en sorte que si la face frontale est verticale, la face de base est non horizontale et en pente montante vers la face frontale.

On a indiqué, ( en mm) sur la fig. 1, les dimensions de ces faces, dans un cas particulier choisi à titre d'exemple uniquement et non limitatif de la portée de l'invention.

La face frontale (L₁) présente une gorge médiane relativement étroite (1) qui s'étend dans la hauteur de cette face et la face de la base (L₂) présente une gorge médiane relativement large (2) qui s'étend dans la longueur de cette face. Ces deux gorges se rejoignent à l'avant du bloc en partie basse.

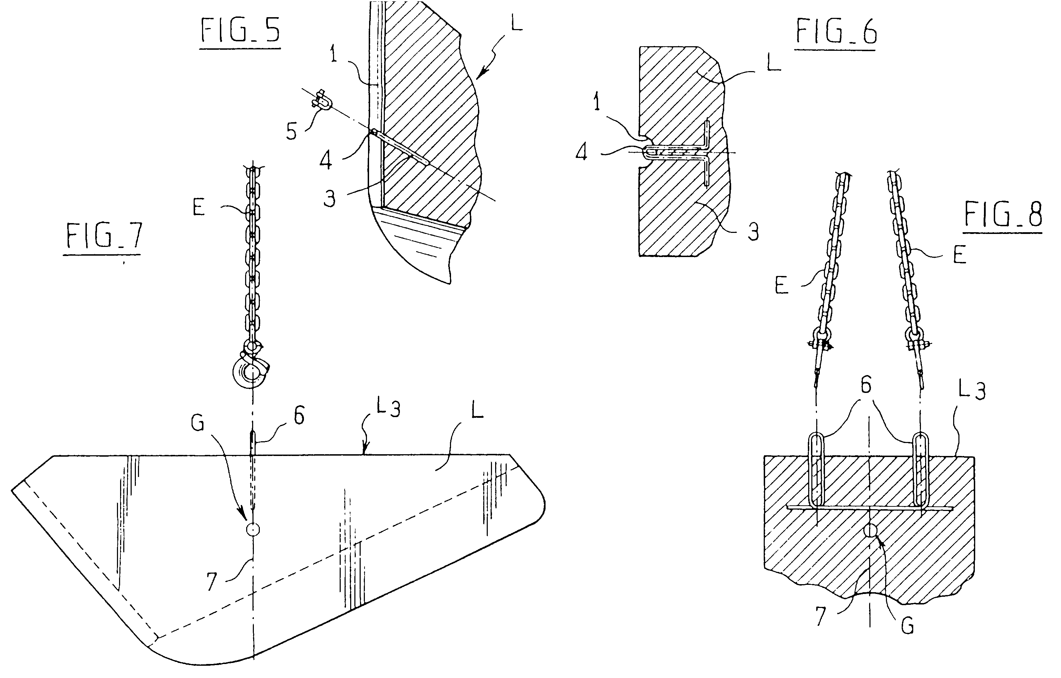

Le bloc comporte un ancrage (3) noyé dans la masse du bloc à l'exception d'une partie (4) qui forme un anneau apparent dans la gorge (1) de la face frontale en partie basse de la gorge (figs. 5 et 6). Cet anneau est destiné à recevoir une manille (5) qui servira à la fixation d'une extrémité d'une traverse (T) dont l'autre extrémité sera fixée de façon similaire à un autre bloc de lestage (L') indentique au bloc (L). Une telle fixation constitue une articulation à deux degrés de liberté, le bloc pouvant pivoter vers le bas ou vers le haut par rapport à la traverse et étant également capable d'un pivotement latéral.

Le bloc peut avantageusement présenter de fabrication plusieurs ancrages répartis dans la hauteur de la gorge 1, ce qui permet de choisir le point d'ancrage en fonction des circonstances.

Le bloc comporte également un ancrage (6) noyé dans la masse du bloc à l'exception de deux anneaux (6) apparents sur la face de dessus du bloc et symétriquement disposés par rapport au plan vertical (7) qui passe par le centre de gravité (G) du bloc. Ces anneaux permettent de suspendre le bloc à des élingues pour la manipulation de mise en place du joug. (figs. 7,8,9).

La masse du bloc est choisie au moins suffisante pour assurer la propre stabilité du bloc dans les conditions de houle prévues.

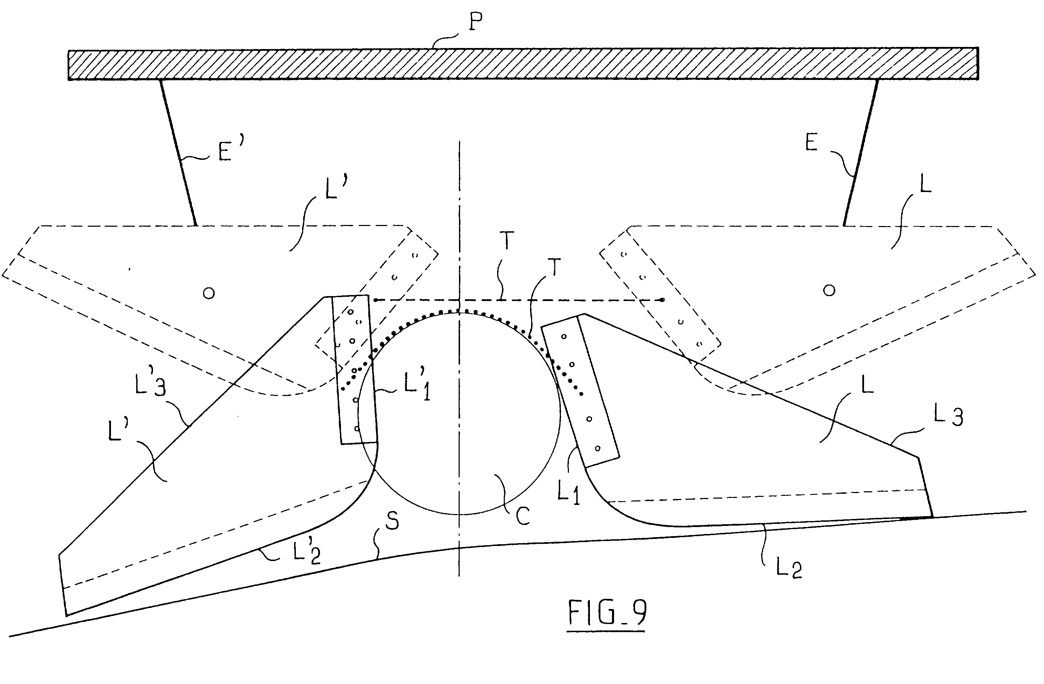

Le joug, constitué des deux blocs (L,L') et de la traverse (T) est descendu à l'aplomb de la conduite (C) au moyen d'un palonnier (P) et des élingues (E,E'), la conduite (C) ayant été préalablement installée sur le fond sous marin S (fig. 9). On règle les conditions en sorte que, de préférence, les faces de dessus des blocs soient sensiblement horizontales jusqu'au voisinage immédiat de la conduite.

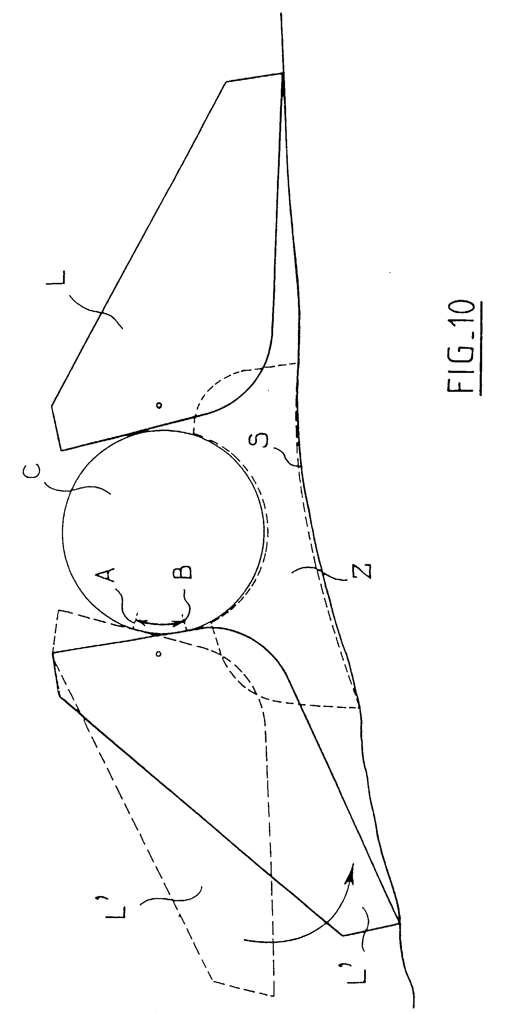

Lorsque la traverse (T) est en contact avec la conduite, il se produit un autocentrage des blocs (L,L') dont les bases viennent au contact du sol, dans des conditions différentes pour les deux blocs si le sol est inégal, comme dans le cas de la fig. 9, les faces frontales de contact pivotant à la demande sur les côtés de la conduite. On a représenté sur la fig. 10, la variation du contact, le bloc (L') étant d'abord en contact avec la génératrice (A) de la conduite puis finalement au contact avec la génératrice (B) de la conduite.

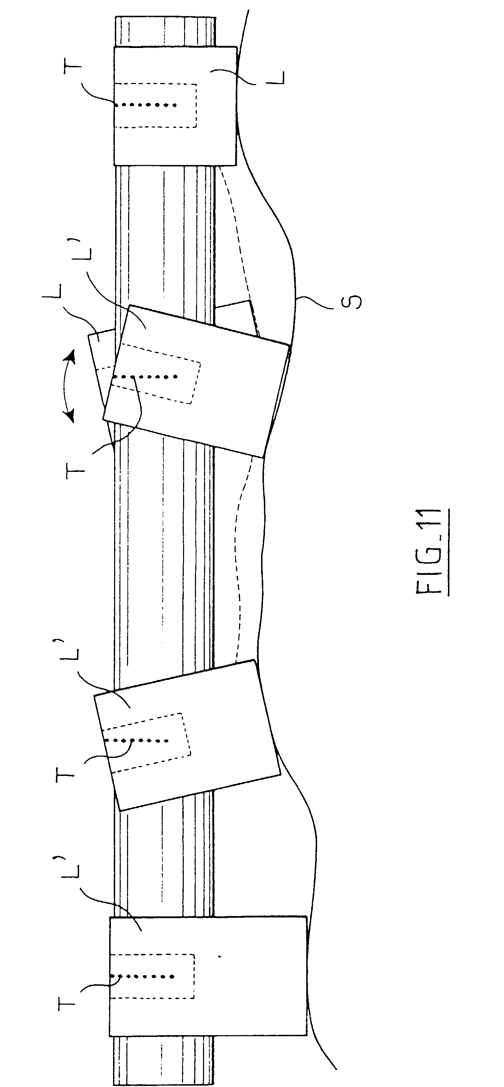

La fig. 11 montre différents jougs dont les blocs ont des positions variables selon la configuration du sol sous-jacent S.

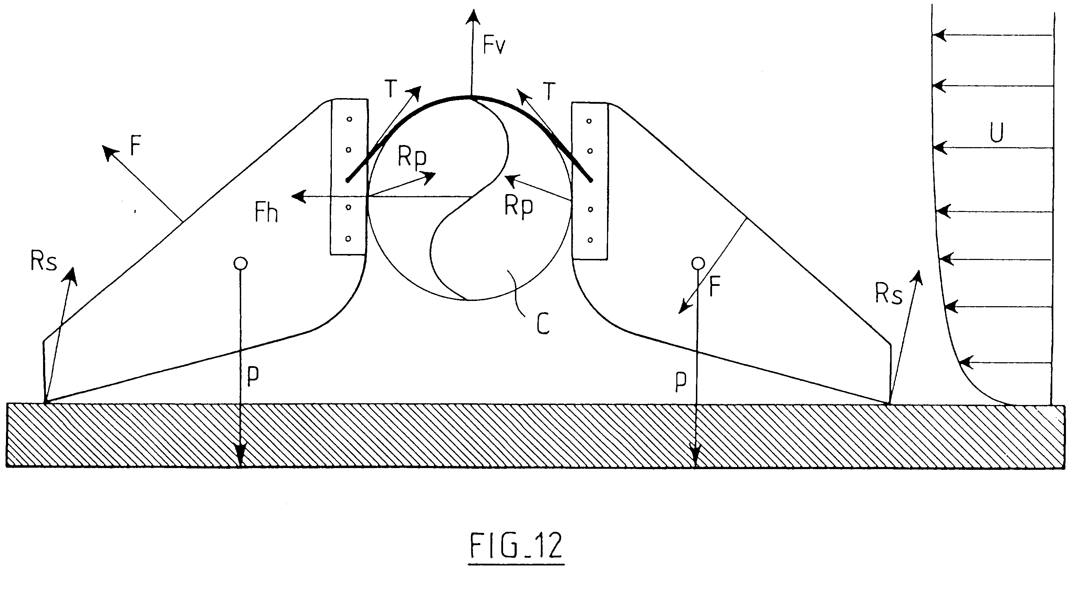

La fig. 12 est un schéma des forces hydrodynamiques en jeu sous l'effet d'une vitesse d'eau U qui tendrait à déplacer la conduite C selon les forces (Fₕ et F_{V}).

La pose des jougs est rapide, même sans plongeur, le remplacement, le déplacement ou l'élimination des jougs sont faciles à réaliser, et les efforts hydrodynamiques pour les houles et les courants perpendiculaires à la conduite ne sont pratiquement pas modifiés.

### Exemple

Pour une conduite de 80 m de longueur, reposant sur trois berceaux constitués de poches de béton (Z) remontant sur les côtes, immergée à une profondeur de trente mètres, constituée par un tube de diamètre extérieur 2 m 42 et de diamètre intérieur 2 m 08 ayant un poids plein dans l'eau de 3,5 T au mètre et susceptible d'être soumise à des efforts pouvant atteindre 6,5 T dans le sens horizontal et 4,5 T dans le sens vertical, on leste la conduite avec des couples de deux blocs, tels que définis sur la fig. 1, chaque joug ayant un poids dans l'air de 54 T (poids dans l'eau de 34 T), et la traverse étant par un fer plat cintré de 15 mm d'épaisseur, ayant une longueur de 4 m et une largeur de 150 mm, à raison de huit à douze jougs par quatre-vingt mètres.

L'invention n'est pas limitée à une forme particulière de bloc de lestage ni à des dimensions particulières de blocs.

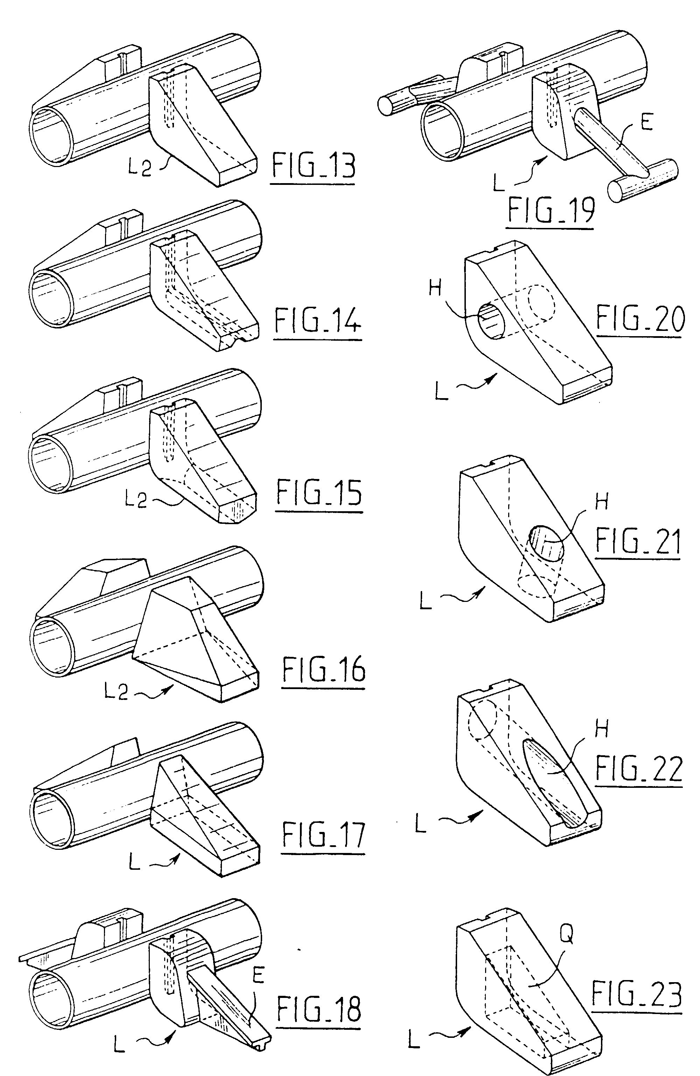

Ainsi on a représenté quelques variantes non exhaustives sur les figs. 13 à 23.

Dans ces variantes :
- la face de base (L₂) des blocs est plane et ne comporte pas de gorge (fig. 13);
- la face de base (L₂) forme un dièdre (fig. 15);
- la forme générale du bloc (L) est trapézoïdale (fig. 16) ;
- la forme générale du bloc (L) est pyramidale (fig. 17);
- le bloc (L) a une forme ramassée et il est pourvu d'une extension (E) vers l'arrière dans le même matériau que le bloc ou dans un matériau différent (figs. 18,19) ;
- le bloc (L) présente un passage (H) traversant de droite à gauche (fig. 20), de haut en bas (fig. 21), ou d'avant en arrière (fig. 22) ;
- le bloc présente un évidement interne (Q) (fig. 23).

Les blocs sont généralement en béton, en acier, éventuellement hybrides acier / béton, béton lourd / béton léger, ou en d'autres matériaux.

La traverse peut avoir une courbure prédéterminée ou variable.

De préférence, les ancrages de fixation du bloc à la traverse et aux élingues sont conçus pour être facilement démontables, ce qui peut être souhaitable pour pouvoir les changer selon les conditions de maintenance. Ces ancrages sont par exemple maintenus par des clavettes ou des boulons.

L'invention n'est pas limitée à une nature particulière de traverse : chaîne, câble, sangle, fer cintré, tôle, etc. La traverse peut être choisie notamment pour conférer elle-même, de par sa structure, une partie ou la totalité des degrés de liberté requis pour les blocs.

## Revendications

1. Joug préfabriqué (L, T, L') pour stabiliser une conduite (C) posée sur le fond de la mer et exposée à l'effet de la houle et des courants, constitué de deux blocs de lestage rigides (L, L') montés en opposition aux extrémités opposées d'une traverse (T) à laquelle ils sont fixés, la traverse (T) étant apte à prendre une configuration cintrée et la longueur de la traverse étant choisie de façon que la traverse soit tendue et maintienne la conduite en position de service lorsque les blocs sont au contact du sol, caractérisé en ce que la traverse est fixée à ses extrémités aux faces frontales (L₁,L₁) destinées au contact avec la conduite des blocs en sorte que les blocs (L, L') soient maintenus au contact de la conduite et puissent pivoter non seulement vers le bas ou vers le haut par rapport à la conduite mais également latéralement en tournant sur eux-mêmes, les attitudes des deux blocs pouvant varier indépendamment.

2. Joug selon la revendication 1, caractérisé en ce que la traverse (T) est fixée aux blocs (L, L') par des articulations (3,5) présentant au moins deux degrés de liberté.

3. Joug selon la revendication 2, caractérisé en ce que les blocs présentent des ancrages (4) situés en partie basse des dites faces frontales (L₁,L₁) pour la fixation de la traverse.

4. Joug selon l'une des revendications 1 à 3, caractérisé en ce que lesdites faces frontales (L₁,L'₁) présentent des saignées (1) dans lesquelles sont situés des ancrages (4) pour la fixation de la traverse.

5. Joug selon l'une des revendications 1 à 4, caractérisé en ce que la face frontale présente plusieurs ancrages (4) repartis en hauteur pour la fixation de la traverse.

6. Joug selon l'une des revendications 1 à 5, caractérisé en ce que lesdites faces frontales (L₁,L'₁ ) sont planes ou sensiblement planes.

7. Joug selon l'une des revendications 1 à 6, caractérisé en ce que le centre de gravité (G) du bloc (L) est plus près de la face frontale du bloc que de l'extrémité opposée du bloc.

8. Joug selon l'une des revendications précédentes, caractérisé en ce que les blocs présentent une face de base (L₂, L'₂) plane ou sensiblement plane.

9. Joug selon la revendication 8, caractérisé en ce que les faces de bases (L₂, L'₂) sont évidées de façon à constituer une gorge centrale (2) entre deux jambages dirigés vers la face frontale du bloc.

10. Joug selon la revendication 8 ou 9, caractérisé en ce que la face de base (L₂) et la face frontale (L₁) font entre elles un angle compris dans la gamme 95 - 125°.

11. Joug selon l'une des revendications précédentes, caractérisé en ce que les blocs (L, L') présentent une face de dessus (L₃) inclinée montante en direction de la face frontale (L₁ ).

12. Joug selon l'une des revendications précédentes, caractérisé en ce que les blocs (L, L') ont en section droite par un plan vertical une forme générale sensiblement triangulaire.

13. Joug selon l'une des revendications précédentes, caractérisé en ce que les blocs présentent des ouvertures traversantes (H ).

14. Joug selon l'une des revendications précédentes, caractérisé en ce que les blocs comportent un prolongement (E) situé à l'opposé de la face de contact.

15. Joug selon l'une des revendications précédentes, caractérisé en ce que les blocs comportent des ancrages (6) pour leur suspension à une élingue de pose, ces ancrages étant situés en sorte que la traverse (T) soit sensiblement horizontale pendant la dépose du Joug sur la conduite.

16. Joug selon l'une des revendications précédentes, caractérisé en ce que la longueur de la traverse entre les fixations (4, 4') de la traverse aux blocs est comprise entre environ 0,50 et environ 0,75 fois le périmètre extérieur de la conduite.

17. Joug selon l'une des revendications précédentes, caractérisé en ce que la traverse (T) est constituée par une chaîne, câble, sangle ou similaire.

18. Joug selon l'une des revendications 1 à 17, caractérisé en ce que la traverse (T) est constituée par une tôle ou un fer plat cintré

19. Joug selon l'une des revendications précédentes, caractérisé en ce que les blocs (L, L') sont en béton.

20. Joug selon l'une des revendications précédentes, caractérisé en ce que chaque bloc (L, L') a une masse comprise dans la gamme 2-50T.

21. Joug selon l'une des revendications précédentes, caractérisé en ce que les fixations de la traverse (T) aux blocs sont démontables.

22. Joug selon l'une des revendications précédentes, caractérisé en ce que les blocs (L, L') ont une hauteur supérieure au diamètre de la conduite.

23. Procédé pour stabiliser une conduite posée sur le fond de la mer, notamment contre les effets de la houle et des courants, dans lequel on pose sur la conduite (C), préalablement installée sur le fond sous marin(S) une pluralité de Jougs (L, T, L') selon l'une des revendications 1 à 22., à des endroits convenablement répartis en fonction du poids apparent de la conduite, du poids apparent des blocs et des conditions de service prévues,

24. Procédé selon la revendication 23, caractérisé en ce qu'on pose la conduite (C) sur des berceaux avant de poser les jougs sur la conduite.

25. Application de jougs selon l'une des revendications 1 à 22 et / ou d'un procédé selon l'une des revendications 23 et 24 à la stabilisation d'une conduite ayant un diamètre extérieur compris dans la game 0,5 m - 3,5 m.

## Patentansprüche

1. Vorgefertigtes Joch (L, T, L') zum Stabilisieren einer Rohrleitung (C), welche auf dem Meeresgrund verlegt ist und dem Einfluß der Dünung und Strömungen unterliegt, das aus zwei steifen Ballastblöcken (L, L') zusammengesetzt ist, welche vis-à-vis an den gegenüberliegenden Endabschnitten einer Traverse (T) angeordnet sind, an der sie befestigt sind, wobei diese Traverse eine gebogene Konfiguration haben kann und die Länge dieser Traverse so gewählt wird, daß diese Traverse gespannt ist und die Rohrleitung in Betriebsstellung hält, wenn die Blöcke mit dem Boden in Berührung stehen,
**dadurch gekennzeichnet, daß**
die Traverse an ihren Endabschnitten an den mit der Rohrleitung in Berührung stehenden Vorderseiten (L₁, L₁') der Blöcke so befestigt ist, daß die Blöcke (L, L') mit der Rohrleitung in Berührung gehalten werden und nicht nur nach unten oder nach oben gegenüber der Rohrleitung sondern auch seitlich durch Drehung um die eigene Achse verschwenkt werden können, und da**ß** sich das Verhalten der beiden Blöcke unabhängig voneinander verändern kann.

2. Vorgefertigtes Joch nach Anspruch 1,
**dadurch gekennzeichnet, daß**
die Traverse (T) an den Blöcken mit Hilfe von Gelenkverbindungen (3, 5) befestigt ist, die mindestens zwei Freiheitsgrade haben.

3. Vorgefertigtes Joch nach Anspruch 2,
**dadurch gekennzeichnet, daß**
die Blöcke mit Verankerungen ausgestattet sind, die am unteren Teil der Vorderseiten (L₁, L'₁) für die Befestigung der Traverse angebracht sind.

4. Vorgefertigtes Joch nach einem der Ansprüche 1 bis 3,
**dadurch gekennzeichnet, daß**
die Vorderseiten (L₁, L'₁) Einschnitte (1) aufweisen, in welche die Verankerungen (4) für die Befestigung der Traverse eingesetzt sind.

5. Vorgefertigtes Joch nach einem der Ansprüche 1 bis 4,
**dadurch gekennzeichnet, daß**
die Vorderseite mit mehreren Verankerungen (4) ausgestattet ist, welche für die Befestigung der Traverse über die Höhe angeordnet sind.

6. Vorgefertigtes Joch nach einem der Ansprüche 1 bis 5,
**dadurch gekennzeichnet, daß**
die Vorderseiten (L₁, L'₁) eben oder weitgehend eben sind.

7. Vorgefertigtes Joch nach einem der Ansprüche 1 bis 6,
**dadurch gekennzeichnet, daß**
der Schwerpunkt (G) des Blockes (L) näher an der Vorderseite des Blockes als an dem gegenüberliegenden Endabschnitt des Blockes liegt.

8. Vorgefertigtes Joch nach einem der vorausgegangenen Ansprüche,
**dadurch gekennzeichnet, daß**
die Blöcke eine ebene oder weitgehend ebene Unterseite L₂, L'₂) besitzen.

9. Vorgefertigtes Joch nach Anspruch 8,
**dadurch gekennzeichnet, daß**
die Unterseiten (L₂, L'₂) so ausgeschnitten sind, daß sie eine zentrale Nut (2) zwischen zwei gegen die Vorderseite des Blockes gerichteten Stützen bilden.

10. Vorgefertigtes Joch nach einem der Ansprüche 8 oder 9,
**dadurch gekennzeichnet, daß**
die Unterseite (L₂) und die Vorderseite (L₁) untereinander einen Winkel im Bereich von 95 - 125° bilden.

11. Vorgefertigtes Joch nach einem der vorausgegangenen Ansprüche,
**dadurch gekennzeichnet, daß**
die Blöcke (L, L') eine Oberseite (L₃) besitzen, welche nach oben in Richtung der Vorderseite (L₁) geneigt ist.

12. Vorgefertigtes Joch nach einem der vorausgegangenen Ansprüche,
**dadurch gekennzeichnet, daß**
die Blöcke (L, L') im Profilschnitt durch eine senkrechte Ebene eine allgemeine weitgehend dreieckige Form haben.

13. Vorgefertigtes Joch nach einem der vorausgegangenen Ansprüche,
**dadurch gekennzeichnet, daß**
die Blöcke mit durchgehenden Öffnungen (H) ausgestattet sind.

14. Vorgefertigtes Joch nach einem der vorausgegangenen Ansprüche,
**dadurch gekennzeichnet, daß**
die Blöcke eine Verlängerung (E) aufweisen, welche gegenüber der Kontaktfläche angeordnet ist.

15. Vorgefertigtes Joch nach einem der vorausgegangenen Ansprüche,
**dadurch gekennzeichnet, daß**
die Blöcke Verankerungen (6) für ihre Aufhängung an einem Heißgeschirr aufweisen, und daß diese Verankerungen so angeordnet sind, daß sich die Traverse (T) während der Montage des Jochs auf der Rohrleitung in einer weitgehend horizontalen Stellung befindet.

16. Vorgefertigtes Joch nach einem der vorausgegangenen Ansprüche,
**dadurch gekennzeichnet, daß**
die Länge der Traverse zwischen den Befestigungen (4, 4') dieser Traverse an den Blöcken etwa zwischen 0,50 und 0,75 mal dem äußeren Umfang der Rohrleitung liegt.

17. Vorgefertigtes Joch nach einem der vorausgegangenen Ansprüche,
**dadurch gekennzeichnet, daß**
die Traverse (T) aus einer Kette, einem Kabel, einem Gurt od.dgl. besteht.

18. Vorgefertigtes Joch nach einem der Ansprüche 1 bis 17,
**dadurch gekennzeichnet, daß**
der Traverse (T) aus einem Blech oder einem gebogenen Flacheisen besteht.

19. Vorgefertigtes Joch nach einem der vorausgegangenen Ansprüche,
**dadurch gekennzeichnet, daß**
die Blöcke (L, L') aus Beton hergestellt sind.

20. Vorgefertigtes Joch nach einem der vorausgegangenen Ansprüche,
**dadurch gekennzeichnet, daß**
jeder der Blöcke (L, L') ein Gewicht im Bereich von 2 bis 50 t hat.

21. Vorgefertigtes Joch nach einem der vorausgegangenen Ansprüche,
**dadurch gekennzeichnet, daß**
die Befestigungen der Traverse (T) an den Blöcken demontierbar sind.

22. Vorgefertigtes Joch nach einem der vorausgegangenen Ansprüche,
**dadurch gekennzeichnet, daß**
die Blöcke (L, L') eine Höhe haben, welche über dem Durchmesser der Rohrleitung liegt.

23. Verfahren für die Stabilisierung einer auf dem Meeresgrund verlegten Rohrleitung, insbesondere gegen die Einwirkung der Dünung und Strömungen, bei dem auf die vorher auf dem Meeresboden (S) installierte Rohrleitung eine Vielzahl von Jochs (L, T, T') nach einem der Ansprüche 1 bis 22 aufgesetzt wird, die entsprechend dem scheinbaren Gewicht der Rohrleitung, dem scheinbaren Gewicht der Blöcke und den vorgesehenen Betriebsbedingungen an entsprechend verteilten Positionen angeordnet sind.

24. Verfahren nach Anspruch 23,
**dadurch gekennzeichnet, daß**
die Rohrleitung (C) vor dem Aufsetzen der Jochs auf die Rohrleitung auf Ablaufschlitten gelagert wird.

25. Einsatz der Jochs nach einem der Ansprüche 1 bis 22 und/oder einem Verfahren nach den Ansprüchen 23 und 24 für die Stabilisierung einer Rohrleitung mit einem Außendurchmesser im Bereich von 0,5 bis 3,5m.

## Claims

1. A prefabricated yoke (L, T, L') for stabilizing a duct (C) placed on the seabed and exposed to the effects of the swell and of currents, the yoke being constituted by two rigid ballasting blocks (L, L') mounted in opposition at opposite ends of a cross-member (T) to which they are fastened, the cross-member (T) being suitable for taking up a curved configuration, and the length of the cross-member being selected so that, in operation, when the blocks are in contact with the seabed, the cross-member is tensioned and holds the duct in position, the yoke being characterized in that the cross-member is fixed at its ends to the front faces (L₁, L'₁) of the blocks that are designed to come into contact with the duct, such that the blocks (L, L') are held in contact with the duct and can pivot not only up and down relative to the duct, but also laterally by twisting, with the two blocks being capable of varying in attitude independently.

2. A yoke according to claim 1, characterized in that the cross-member (T) is fastened to the blocks (L, L') by hinges (3, 5) each having at least two degrees of freedom.

3. A yoke according to claim 2, characterized in that the blocks have anchor points (4) situated in the bottom portions of said front faces (L₁, L'₁) for fastening the cross-member.

4. A yoke according to any one of claims 1 to 3, characterized in that said front faces (L₁, L'₁) have grooves (1) in which the anchor points (4) for fastening the cross-member are situated.

5. A yoke according to any one to claims 1 to 4, characterized in that the front face has a plurality of anchor points (4) for fastening the cross-member at various heights.

6. A yoke according to any one of claims 1 to 5, characterized in that said front faces (L₁, L'₁) are plane or substantially plane.

7. A yoke according to any one of claims 1 to 6, characterized in that the center of gravity (G) of a block (L) is closer to the front face of the block than to the opposite end of the block.

8. A yoke according to any preceding claim, characterized in that each block has a bottom face (L₂, L'₂) that is plane or substantially plane.

9. A yoke according to claim 8, characterized in that the bottom faces (L2, L'2) are hollowed out to constitute a central slot (2) between two limbs directed towards the front face of the block.

10. A yoke according to claim 8 or 9, characterized in that the bottom face (L₂) and the front face (L₁) are at an angle to each other lying in the range 95° to 125°.

11. A yoke according to any preceding claim, characterized in that each block (L, L') has a top face (L₃) sloping up towards the front face (L₁).

12. A yoke according to any preceding claim, characterized in that each block (L, L') is substantially triangular in shape in right section on a vertical plane.

13. A yoke according to any preceding claim, characterized in that the blocks have through openings (H).

14. A yoke according to any preceding claim, characterized in that each block has an extension (E) situated opposite the contact face.

15. A yoke according to any preceding claim, characterized in that the blocks include anchor points (6) enabling them to be suspended from a laying sling, the anchor points being situated in such a manner that the cross-member (T) is substantially horizontal while the yoke is being laid on the duct.

16. A yoke according to any preceding claim, characterized in that the length of the cross-member between the fastening points (4, 4') of the cross-member to the blocks lies in the range about 0.50 times to about 0.75 times the outside perimeter of the duct.

17. A yoke according to any preceding claim, characterized in that the cross-member (T) is constituted by a chain, a cable, a strap, or the like.

18. A yoke according to any one of claims 1 to 17, characterized in that the cross-member (T) is constituted by sheet metal or by a curved flat iron bar.

19. A yoke according to any preceding claim, characterized in that the blocks (L, L') are made of concrete.

20. A yoke according to any preceding claim, characterized in that each block (L, L') is of mass lying in the range 2 tonnes to 50 tonnes.

21. A yoke according to any preceding claim, characterized in that the fastenings between the cross-member (T) and the blocks are releasable.

22. A yoke according to any preceding claim, characterized in that the height of the blocks (L, L') is greater than the diameter of the duct.

23. A method of stabilizing a duct placed on the seabed, in particular against the effects of the swell and of currents, in which a plurality of yokes (L, T, L') according to any one of claims 1 to 22 are placed on the duct (C), itself previously installed on the seabed (S), the yokes being installed at locations that are appropriately spaced apart as a function of the apparent weight of the duct, of the apparent weight of the blocks, and of the expected service conditions.

24. A method according to claim 23, characterized in that the duct (C) is laid on cradles prior to laying the yokes on the duct.

25. The use of yokes according to any one of claims 1 to 22 and/or of a method according to claim 23 or 24 in stabilizing a duct having an outside diameter lying in the range 0.5 meters to 3.5 meters.
